# EUROPÄISCHE PATENTSCHRIFT

(11) **EP 4 407 204 B1**
(45) Veröffentlichungstag und Bekanntmachung des Hinweises auf die Patenterteilung: **12.08.2026**
(21) Anmeldenummer: 24153377.7
(22) Anmeldetag: 23.01.2024
(51) Int. Cl.: F16D 3/06, F16D 3/62, F16D 3/72, F16D 11/14

(54) **WELLENVERBINDUNG**
SHAFT CONNECTION
LIAISON D'ARBRE

(30) Priorität: 24.01.2023 DE 102023101673
(43) Veröffentlichungstag der Anmeldung: 31.07.2024
(73) Patentinhaber: WITTENSTEIN SE, 97999 Igersheim (DE)
(72) Erfinder: Eck, Alexander, 97268 Kirchheim (DE); Seitz, Nikolai, 97950 Gerchsheim (DE)
(74) Vertreter: Zimmermann & Partner Patentanwälte mbB

(56) Entgegenhaltungen:
- DE-A1- 10 046 440
- DE-A1- 10 051 587
- DE-A1- 102013 226 053
- JP-A- 2007 314 133
- US-A1- 2020 096 049

## Beschreibung

### Gebiet der Erfindung

Die Offenbarung betrifft eine Wellenverbindung, eine Kupplung und eine Verwendung einer Wellenverbindung oder einer Kupplung.

### Stand der Technik

Aus dem Stand der Technik sind Wellenverbindungen oder Kupplungen bekannt, wobei zwei Wellen über eine Feder verbunden sind. Die Feder kann eine Rückstellkraft in axialer Richtung auf eine der zwei Wellen gegenüber einer anderen der zwei Wellen bewirken. Beispielsweise offenbart die WO 2020/128403 A1 eine Krafterzeugungsvorrichtung für einen Flugzeugsteuerknüppel, wobei ein Aktuator durch einen Elektromagneten bewegt werden kann, und wobei eine Feder eine Rückholkraft auf den Aktuator ausübt. Die US 2020/096049 A1 betrifft eine Vorrichtung zur Kompensation eines axialen Spiels in einer Antriebskette eines Fahrzeugs. Die JP 2007 314133 A betrifft einen Radsatz für einen LKW. Die DE 100 51 587 A1 betrifft ein Getriebe mit einer Vorrichtung zur Drehmomentübertragung.

Allerdings weisen aus dem Stand der Technik bekannte Wellenverbindungen oder Kupplungen Restriktionen auf, insbesondere in Bezug auf eine Verdrehsteifigkeit von Wellenverbindungen oder in Bezug auf eine von der Wellenverbindung bereitgestellte axiale Hubkraft.

### Offenbarung der Erfindung

Aufgabe der Offenbarung ist es, eine Wellenverbindung, eine Kupplung und eine Verwendung einer Wellenverbindung oder einer Kupplung anzugeben, welche gegenüber dem Stand der Technik verbessert sind. Insbesondere sollte eine Wellenverbindung angegeben werden, welche eine hohe Verdrehsteifigkeit aufweist oder eine geringe axiale Hubkraft erfordert.

Die Aufgabe wird mit einer Wellenverbindung gemäß Anspruch 1 und einer Kupplung und einer Verwendung nach den nebengeordneten Ansprüchen gelöst.

Gemäß einem Aspekt wird eine Wellenverbindung angegeben. Die Wellenverbindung umfasst eine um eine Drehachse drehbare erste Welle, eine koaxial zu der ersten Welle angeordnete und relativ zu der ersten Welle axial bewegliche zweite Welle, und mindestens ein Federelementpaar mit jeweils einem ersten Federelement und einem zweiten Federelement, wobei das erste Federelement und das zweite Federelement jeweils an der ersten Welle und an der zweiten Welle befestigt sind, und wobei das erste Federelement und das zweite Federelement axial versetzt zueinander angeordnet sind. Das erste Federelement und das zweite Federelement sind überkreuzt angeordnet.

Gemäß einem weiteren Aspekt wird eine Kupplung angegeben. Die Kupplung umfasst eine Wellenverbindung nach einer der hierin beschriebenen Ausführungsformen, und eine koaxial zu der ersten Welle und der zweiten Welle angeordnete Rotorwelle, wobei die Kupplung zum Kuppeln der ersten Welle und der zweiten Welle mit der Rotorwelle dazu eingerichtet ist, die zweite Welle axial in Richtung der Rotorwelle zu bewegen.

Gemäß noch einem weiteren Aspekt wird eine Verwendung einer Wellenverbindung nach einer der hierin beschriebenen Ausführungsformen oder einer Kupplung nach einer der hierin beschriebenen Ausführungsformen angegeben, mit Bewegen der zweiten Welle relativ zu der ersten Welle in einer axialen Richtung.

Bei typischen Ausführungsformen umfasst die Wellenverbindung eine erste Welle. Typischerweise ist die erste Welle der Wellenverbindung um eine Drehachse drehbar. Die Begriffe "axial", "koaxial", "radial" und "in Umfangsrichtung" beziehen sich hierin insbesondere auf die Drehachse. Unter einer axialen Richtung ist insbesondere eine Richtung der Drehachse zu verstehen. Typischerweise umfasst die Wellenverbindung eine zweite Welle. Bei typischen Ausführungsformen sind die erste Welle und die zweite Welle koaxial angeordnet. Bei typischen Ausführungsformen ist die erste Welle eine Abtriebswelle. Die zweite Welle ist typischerweise eine Antriebswelle. Bei weiteren typischen Ausführungsformen kann die erste Welle eine Antriebswelle sein und die zweite Welle eine Abtriebswelle. Bei typischen Ausführungsformen ist die erste Welle oder die zweite Welle als Hohlwelle ausgebildet, insbesondere kreisringförmig. Bei weiteren typischen Ausführungsformen ist die erste Welle oder die zweite Welle als Vollwelle ausgebildet. Typischerweise sind die erste Welle und die zweite Welle aus Metall hergestellt.

Bei typischen Ausführungsformen umfasst die Wellenverbindung mindestens ein Federelementpaar. Typischerweise bilden ein erstes Federelement und ein zweites Federelement ein Federelementpaar. Bei Ausführungsformen sind das erste Federelement und das zweite Federelement identisch ausgebildet. Typischerweise sind die erste Welle und die zweite Welle über das mindestens eine Federelementpaar miteinander verbunden, insbesondere drehfest miteinander verbunden.

Typischerweise sind das erste Federelement und das zweite Federelement eines Federelementpaars jeweils an der ersten Welle und an der zweiten Welle befestigt, insbesondere über kraft- oder formschlüssige Befestigungsmittel wie Schrauben oder Nieten. Bei Ausführungsformen können die erste Welle und die zweite Welle abgestufte Planflächen zur Befestigung des mindestens einen Federelementpaares aufweisen.

Typischerweise sind das erste Federelement und das zweite Federelement des mindestens einen Federelementpaares axial versetzt zueinander angeordnet. Insbesondere sind das erste Federelement und das zweite Federelement axial beabstandet zueinander angeordnet. Ein axialer Abstand zwischen einem Federelement eines Federelementpaares und der ersten Welle oder der zweiten Welle kann beispielsweise durch einen axialen Abstandshalter bereitgestellt werden, welcher an der Befestigungsposition des Federelements zwischen dem Federelement und der ersten Welle oder der zweiten Welle angeordnet ist. Abstandshalter können als Teil von Befestigungsmitteln zum Befestigen der Federelemente an der ersten Welle und an der zweiten Welle ausgebildet sein. Ein axialer Abstand zwischen den Federelementen eines Federelementpaares kann durch unterschiedliche Abstände der Federelemente zu der ersten Welle oder der zweiten Welle bereitgestellt werden. Unterschiedliche axiale Abstände der Federelemente zu der ersten Welle oder der zweiten Welle können beispielsweise durch die Verwendung unterschiedlicher Abstandshalter an den Befestigungspositionen der Federelemente bereitgestellt werden.

Bei typischen Ausführungsformen ist das erste Federelement dazu eingerichtet, in einer ersten Drehrichtung der ersten Welle und der zweiten Welle auf Zug belastet zu werden. Typischerweise ist das zweite Federelement dazu eingerichtet, in einer von der ersten Drehrichtung verschiedenen, zweiten Drehrichtung der ersten Welle und der zweiten Welle auf Zug belastet zu werden. Bei Ausführungsformen kann mindestens ein Federelementpaar insbesondere derart angeordnet sein, dass bei Drehung der ersten Welle und der zweiten Welle stets ein Federelement des Federelementpaares unabhängig von der Drehrichtung auf Zug belastet wird, während das andere Federelement des Federelementpaares auf Druck belastet wird. Ausführungsformen können insbesondere eine hohe Verdrehsteifigkeit in beiden Drehrichtungen um die Drehachse aufweisen. Beispielsweise kann eine hohe Verdrehsteifigkeit erreicht werden, ohne ein Federelement zur Vermeidung eines Knickens unter Druckbelastung besonders massiv auszugestalten.

Typischerweise ist die zweite Welle relativ zu der ersten Welle axial beweglich. Typischerweise ist die Beweglichkeit der zweiten Welle relativ zu der ersten Welle in axialer Richtung begrenzt. Typischerweise ist die Beweglichkeit der zweiten Welle axial in Richtung der ersten Welle durch einen Anschlag der ersten Welle oder durch eine maximale Auslenkungsposition des mindestens einen Federelementpaares in Richtung der ersten Welle begrenzt. Typischerweise ist die Beweglichkeit der zweiten Welle in axialer Richtung weg von der ersten Welle durch das mindestens eine Federelementpaar begrenzt. Typischerweise ist die maximale axiale Auslenkung weg von der ersten Welle der zweiten Welle relativ zu der ersten Welle durch einen axialen Abstand zwischen dem ersten Federelement und dem zweiten Federelement begrenzt oder vorbestimmt, wobei sich der axiale Abstand zwischen dem ersten Federelement und dem zweiten Federelement auf den axialen Abstand in einem nicht ausgelenkten Zustand des ersten Federelements und des zweiten Federelements bezieht.

Bei typischen Ausführungsformen sind das erste Federelement und das zweite Federelement jeweils als eine Blattfeder ausgebildet. Typischerweise weist eine Blattfeder zwei parallele, flache Seiten auf. Eine Dicke der Blattfeder, gemessen zwischen den zwei flachen Seiten, ist typischerweise kleiner als eine Länge oder eine Breite der Blattfeder, insbesondere mindestens fünfmal oder mindestens zehnmal kleiner. Typischerweise ist eine Blattfeder länglich ausgebildet. Beispielsweise kann die Länge der Blattfeder mindestens doppelt so groß sein wie die Breite der Blattfeder, insbesondere mindestens dreimal so groß oder mindestens viermal so groß. Bei typischen Ausführungsformen ist eine Blattfeder aus Metall, insbesondere aus Federstahlblech hergestellt.

Typischerweise ist eine jeweilige Blattfeder des ersten Federelements oder des zweiten Federelements zumindest im Wesentlichen parallel zu einer zu der Drehachse orthogonalen Ebene oder einer Planfläche der ersten Welle oder der zweiten Welle ausgerichtet, insbesondere wenn die Blattfeder nicht aus der Ruhelage der Blattfeder ausgelenkt ist. Typischerweise sind die flachen Seiten der Blattfeder zumindest im Wesentlichen parallel zu einer zu der Drehachse orthogonalen Ebene ausgerichtet. Unter einer zumindest im Wesentlichen parallelen Ausrichtung ist insbesondere eine Abweichung von maximal 10 Grad, insbesondere von maximal 5 Grad oder von maximal 2 Grad zu verstehen.

Gemäß typischen Ausführungsformen ist eine jeweilige Blattfeder des ersten Federelements oder des zweiten Federelements bogenförmig ausgebildet, insbesondere kreisbogenförmig oder bananenförmig. Die Blattfeder kann beispielsweise im Wesentlichen in Form eines Kreisringausschnittes ausgebildet sein. Typischerweise ist die Blattfeder bogenförmig entlang einer Längsrichtung der Blattfeder ausgebildet. Typischerweise ist die Blattfeder radial nach außen gewölbt in der Wellenverbindung angeordnet. Bei Ausführungsformen erstreckt sich die Blattfeder im Wesentlichen in Umfangsrichtung um die Drehachse. Bei Ausführungsformen liegt ein Bogenmittelpunkt einer bogenförmig ausgebildeten Blattfeder radial innerhalb der radial innersten Befestigungsposition des mindestens einen Federelementpaares. Mit bogenförmigen Federelementen kann beispielsweise bei Ausführung der ersten Welle oder der zweiten Welle als Hohlwelle ein größerer Innendurchmesser der ersten Welle oder der zweiten Welle bereitgestellt werden. Bei weiteren typischen Ausführungsformen ist eine jeweilige Blattfeder des ersten Federelements oder des zweiten Federelements gerade ausgebildet. Eine gerade Ausgestaltung kann eine höhere rotative Steifigkeit der Blattfeder bereitstellen.

Bei typischen Ausführungsformen sind das erste Federelement und das zweite Federelement eines Federelementpaares überkreuzt angeordnet. Insbesondere überkreuzen sich das erste Federelement und das zweite Federelement in einer Ansicht entlang der Drehachse. Das erste Federelement und das zweite Federelement können sich symmetrisch überkreuzen. Die überkreuzte Anordnung der Federelemente kann eine hohe drehrichtungsunabhängige Steifigkeit bereitstellen. Bei Ausführungsformen ist das erste Federelement an einer ersten Befestigungsposition an der ersten Welle und an einer radial innerhalb der ersten Befestigungsposition vorgesehenen, zweiten Befestigungsposition an der zweiten Welle befestigt. Typischerweise ist das zweite Federelement an einer dritten Befestigungsposition an der ersten Welle und an einer radial innerhalb der dritten Befestigungsposition vorgesehenen, vierten Befestigungsposition an der zweiten Welle befestigt. Typischerweise ist die dritte Befestigungsposition in einer ersten Umfangsrichtung um einen ersten Winkel versetzt zu der ersten Befestigungsposition angeordnet. Typischerweise ist die vierte Befestigungsposition in einer von der ersten Umfangsrichtung verschiedenen, zweiten Umfangsrichtung um einen zweiten Winkel versetzt zu der zweiten Befestigungsposition angeordnet.

Bei typischen Ausführungsformen erstrecken sich das erste Federelement und das zweite Federelement jeweils über denselben Winkelbereich um die Drehachse. Typischerweise umfasst der Winkelbereich mindestens 60 Grad, insbesondere mindestens 70 Grad, oder maximal 130 Grad, insbesondere maximal 120 Grad. Insbesondere kann der Winkelbereich mindestens 70 Grad und maximal 120 Grad umfassen, beispielsweise ungefähr 90 Grad. Eine große Federlänge der Federelemente kann beispielsweise eine geringe Rückstellkraft der Federelemente bereitstellen. Eine geringe Rückstellkraft kann eine weiche axiale Verbindung zwischen der ersten Welle und der zweiten Welle bereitstellen, so dass insbesondere eine zum axialen Bewegen der zweiten Welle eingerichtete Hubvorrichtung nur eine geringe Hubkraft zum Überwinden der Rückstellkraft benötigt. Typischerweise sind die erste Befestigungsposition des ersten Federelements und die vierte Befestigungsposition des zweiten Federelements an einer ersten Winkelposition bezüglich der Drehachse angeordnet. Typischerweise sind die zweite Befestigungsposition des ersten Federelements und die dritte Befestigungsposition des zweiten Federelements an einer von der ersten Winkelposition verschiedenen, zweiten Winkelposition angeordnet. Typischerweise schließen die erste Winkelposition und die zweite Winkelposition einen der hierin beschriebenen Winkelbereiche ein.

Gemäß typischen Ausführungsformen weisen das erste Federelement und das zweite Federelement jeweils eine Befestigungsposition auf einem ersten Kreis um die Drehachse an der ersten Welle auf. Typischerweise weisen das erste Federelement und das zweite Federelement jeweils eine weitere Befestigungsposition auf einem zweiten Kreis um die Drehachse an der zweiten Welle auf. Die Befestigungsposition und die weitere Befestigungsposition eines Federelements liegen typischerweise an gegenüberliegenden Enden des Federelements. Typischerweise weisen der erste Kreis und der zweite Kreis unterschiedliche Radien auf. Beispielsweise weist der erste Kreis bei Ausführungsformen einen größeren Radius auf als der zweite Kreis. Insbesondere können die erste Befestigungsposition des ersten Federelements und die dritte Befestigungsposition des zweiten Federelements auf dem ersten Kreis um die Drehachse vorgesehen sein. Die zweite Befestigungsposition des ersten Federelements und die vierte Befestigungsposition des zweiten Federelements können auf dem zweiten Kreis um die Drehachse vorgesehen sein. Bei weiteren typischen Ausführungsformen kann der erste Kreis einen kleineren Radius als der zweite Kreis aufweisen.

Bei typischen Ausführungsformen umfasst die Wellenverbindung mindestens zwei Federelementpaare, insbesondere mindestens drei Federelementpaare. Beispielsweise kann die Wellenverbindung genau zwei, genau drei oder genau vier Federelementpaare umfassen. Die Anzahl der Federelementpaare kann beispielsweise in Abhängigkeit eines bereitzustellenden axialen Hubs der zweiten Welle oder eines zu übertragenden Drehmoments gewählt werden. Bei einer beispielhaften Ausführungsform weist die Wellenverbindung genau drei Federelementpaare auf. Insbesondere kann ein großer axialer Hub erreicht und ein hohes Drehmoment übertragen werden.

Bei typischen Ausführungsformen mit mehr als einem Federelementpaar umfasst jedes Federelementpaar ein erstes Federelement und ein zweites Federelement, insbesondere ein erstes Federelement und ein zweites Federelement nach hierin beschriebenen Ausführungsformen. Typischerweise sind alle ersten Federelemente der Wellenverbindung identisch ausgebildet. Typischerweise sind alle zweiten Federelemente der Wellenverbindung identisch ausgebildet. Insbesondere können alle ersten Federelemente und alle zweiten Federelemente identisch ausgebildet sein. Bei Ausführungsformen sind die mindestens zwei Federelementpaare in Umfangsrichtung um die Drehachse verteilt angeordnet, insbesondere gleichmäßig in Umfangsrichtung verteilt angeordnet. Typischerweise sind die mindestens zwei Federelementpaare in Umfangsrichtung getrennt voneinander angeordnet, insbesondere ohne eine Überlappung der Federelementpaare in Umfangsrichtung.

Gemäß Ausführungsformen sind die erste Welle und die zweite Welle in einer axialen Richtung hintereinander angeordnet. Bei Ausführungsformen können eine radiale Erstreckung der ersten Welle und eine radiale Erstreckung der zweiten Welle jeweils einen überlappenden, radialen Bereich umfassen. Die erste Welle und die zweite Welle können in dem überlappenden, radialen Bereich axial hintereinander angeordnet sein. Das erste Federelement und das zweite Federelement können in dem überlappenden, radialen Bereich an der ersten Welle oder an der zweiten Welle befestigt sein. Insbesondere können die Befestigungspositionen des ersten Federelements und des zweiten Federelements an der ersten Welle und an der zweiten Welle in dem überlappenden, radialen Bereich vorgesehen sein.

Typischerweise ist die zweite Welle relativ zu der ersten Welle in axialer Richtung beweglich. Typischerweise ist die zweite Welle in axialer Richtung relativ zu der ersten Welle zumindest zwischen zwei axialen Positionen beweglich, insbesondere zwischen einer ersten axialen Position und einer zweiten axialen Position. Die erste axiale Position kann eine axiale Position nahe der ersten Welle sein, insbesondere an einem axialen Anschlag des Gehäuses oder der ersten Welle, oder eine Ruhestellung, in welcher das mindestens eine Federelementpaar in einem axial entlasteten Zustand bezüglich der ersten Welle ist. Die zweite axiale Position ist typischerweise weiter entfernt von der ersten Welle als die erste axiale Position.

Typischerweise ist die zweite Welle unter Wirkung einer von dem mindestens einen Federelementpaar erzeugten Federkraft in axialer Richtung beweglich. Die Federkraft kann hierin insbesondere auch als Rückstellkraft des mindestens einen Federelementpaars bezeichnet werden. Insbesondere ist das mindestens eine Federelementpaar typischerweise dazu eingerichtet, bei einer axialen Bewegung der zweiten Welle relativ zu der ersten Welle eine Rückstellkraft auf die zweite Welle zu bewirken. Typischerweise ist das mindestens eine Federelementpaar dazu eingerichtet, bei einer Auslenkung oder Bewegung der zweiten Welle von der ersten axialen Position zu der zweiten axialen Position eine Rückstellkraft auf die zweite Welle in Richtung der ersten axialen Position zu bewirken. Bei Positionierung der zweiten Welle an der zweiten axialen Position kann die Auslenkung der Federelemente insbesondere eine Spielfreiheit zwischen der ersten Welle und der zweiten Welle bereitstellen. Bei weiteren Ausführungsformen kann das mindestens eine Federelementpaar dazu eingerichtet sein, bei einer Auslenkung oder Bewegung der zweiten Welle in axialer Richtung von der zweiten axialen Position hin zu der ersten axialen Position eine Rückstellkraft auf die zweite Welle in Richtung der zweiten axialen Position zu bewirken.

Gemäß typischen Ausführungsformen ist eine maximale axiale Auslenkung der zweiten Welle relativ zu der ersten Welle durch die Anordnung und Form des ersten Federelements und des zweiten Federelements bestimmt oder begrenzt, insbesondere durch den axialen Abstand des ersten Federelements und des zweiten Federelements zueinander. Die maximale axiale Auslenkung der zweiten Welle kann insbesondere dem axialen Abstand zwischen dem ersten Federelement und dem zweiten Federelement entsprechen.

Bei Ausführungsformen weist die zweite Welle eine Verzahnung auf. Typischerweise ist die Verzahnung auf der der ersten Welle abgewandten Seite der zweiten Welle vorgesehen. Die Verzahnung kann beispielsweise eine Stirnverzahnung oder Planverzahnung sein, insbesondere eine Hirthverzahnung.

Gemäß typischen Ausführungsformen umfasst eine Kupplung eine Wellenverbindung nach einer der hierin beschriebenen Ausführungsformen. Typischerweise sind die erste Welle und die zweite Welle der Wellenverbindung durch das mindestens eine Federelementpaar der Wellenverbindung zumindest im Wesentlichen spielfrei oder zumindest im Wesentlichen verdrehsteif miteinander verbunden. Typische Kupplungen können für einen Aktuator in einem Fluggerät eingerichtet sein, beispielsweise für einen Aktuator einer Fluggerätsteuerung.

Typischerweise umfasst die Kupplung eine koaxial zu der ersten Welle und der zweiten Welle angeordnete Rotorwelle. Die Kupplung kann ein Gehäuse umfassen, welches insbesondere zumindest teilweise die Rotorwelle umgreift. Die Rotorwelle ist typischerweise in axialer Richtung unbeweglich bezüglich der ersten Welle angeordnet. Die Kupplung ist typischerweise dazu eingerichtet, die erste Welle und die zweite Welle mit der Rotorwelle zu kuppeln. Typischerweise ist die Kupplung dazu eingerichtet, die zweite Welle axial in Richtung der Rotorwelle zu bewegen, um die erste Welle und die zweite Welle mit der Rotorwelle zu kuppeln. Typischerweise kann die zweite Welle zum Entkuppeln der Rotorwelle von der ersten Welle und der zweiten Welle in axialer Richtung weg von der Rotorwelle bewegt werden. Die Rotorwelle kann typischerweise mit der Welle eines Antriebs, insbesondere eines Elektromotors oder eines Hydraulikaggregats verbunden sein.

Typischerweise kann die zweite Welle an einer ersten axialen Position angeordnet werden, in welcher die Rotorwelle von der ersten Welle und der zweiten Welle entkuppelt ist. Typischerweise kann die zweite Welle an einer zweiten axialen Position angeordnet werden, in welcher die Rotorwelle mit der ersten Welle und der zweiten Welle gekuppelt ist. Insbesondere können bei der Anordnung der zweiten Welle an der zweiten axialen Position die zweite Welle und die Rotorwelle in direktem Kontakt stehen und beispielsweise reibschlüssig oder formschlüssig verbunden sein. Bei Ausführungsformen weist die zweite Welle eine erste Verzahnung auf. Die Rotorwelle weist typischerweise eine zum Eingriff mit der ersten Verzahnung eingerichtete zweite Verzahnung auf. Die erste Verzahnung und die zweite Verzahnung können jeweils beispielsweise eine Stirnverzahnung oder eine Planverzahnung sein, insbesondere eine Hirthverzahnung.

Bei typischen Ausführungsformen umfasst die Kupplung eine Hubvorrichtung zum Bewegen der zweiten Welle in axialer Richtung mittels einer von der Hubvorrichtung erzeugten Hubkraft. Gemäß typischen Ausführungsformen umfasst die Hubvorrichtung einen Elektromagneten, insbesondere eine oder mehrere Magnetspulen. Der Elektromagnet kann in einem Gehäuse der Kupplung angeordnet sein. Der Elektromagnet ist typischerweise eingerichtet zum Bewegen der zweiten Welle gegen eine Rückstellkraft des mindestens einen Federelementpaares von einer ersten axialen Position zu einer zweiten axialen Position. Die erste axiale Position und die zweite axiale Position können bezüglich der ersten Welle und der Rotorwelle nach hierin beschriebenen Ausführungsformen vorgesehen sein. Die Bewegung zwischen der ersten axialen Position und der zweiten axialen Position kann hierin auch als "Hub" oder als "axialer Hub" bezeichnet werden. Typischerweise ist die Kupplung eingerichtet, einen definierten axialen Hub der zweiten Welle zum Kuppeln oder Entkuppeln auszuführen.

Typischerweise wirkt die Rückstellkraft bei Anordnung der zweiten Welle an der zweiten axialen Position in Richtung der ersten axialen Position. Typischerweise wirkt eine Magnetkraft des Elektromagneten, welche auf eine an der ersten axialen Position angeordnete zweite Welle ausgeübt wird, in Richtung der zweiten axialen Position. Die Magnetkraft wird typischerweise bei Bestromung des Elektromagneten ausgeübt. Die Magnetkraft kann über einen magnetischen Kreis bewirkt werden. Der magnetische Kreis kann den Elektromagneten, die zweite Welle und beispielsweise das Gehäuse oder die Rotorwelle umfassen. Typischerweise ist die Bestromung des Elektromagneten zum Bewegen der zweiten Welle an die zweite axiale Position geeignet, insbesondere zum Kuppeln der ersten Welle und der zweiten Welle mit der Rotorwelle. Der Elektromagnet ist typischerweise dazu eingerichtet, bei Bestromung des Elektromagneten eine Magnetkraft auf die zweite Welle auszuüben, welche zumindest gleich groß wie die Rückstellkraft des mindestens einen Federelementpaares auf die zweite Welle an der zweiten axialen Position ist.

Das mindestens eine Federelementpaar ist typischerweise dazu eingerichtet, die zweite Welle bei unbestromtem Elektromagneten an die erste axiale Position zu bewegen, um die Rotorwelle von der ersten Welle und der zweiten Welle zu entkuppeln. Insbesondere kann das mindestens eine Federelementpaar bei Ausführungsformen die zweite Welle mit einer ersten Verzahnung aus einem Eingriff mit einer zweiten Verzahnung der Rotorwelle ausrücken. Typische Ausführungsformen können insbesondere als Kupplung mit einer "fail-safe"-Funktion ausgeführt sein, wobei bei einem Versagen oder Abschalten der Bestromung des Elektromagneten die Kupplung öffnet. Typischerweise wird die zweite Welle in Abwesenheit der Magnetkraft durch das mindestens eine Federelementpaar in Richtung der ersten Welle und an die erste axiale Position gezogen. Insbesondere wird die Rotorwelle von der ersten Welle und der zweiten Welle entkuppelt. **In** Ausführungsformen werden die erste Welle und die zweite Welle gegenüber dem Gehäuse festgesetzt oder gebremst.

Bei weiteren typischen Ausführungsformen kann der Elektromagnet dazu eingerichtet sein, eine Magnetkraft auf die zweite Welle in Richtung der ersten axialen Position auszuüben und insbesondere an die erste axiale Position zu bewegen. Das mindestens eine Federelementpaar kann eingerichtet sein, eine Federkraft auf eine an der ersten axialen Position angeordnete zweite Welle in Richtung der zweiten axialen Position zu bewirken. Insbesondere kann das mindestens eine Federelementpaar dazu eingerichtet sein, die zweite Welle bei unbestromtem Elektromagneten von der ersten axialen Position an die zweite axiale Position zu bewegen. Insbesondere ist die Rotorwelle bei unbestromtem Elektromagneten mit der ersten Welle und der zweiten Welle gekuppelt. Die Kupplung kann eine "fail-safe"-Funktion aufweisen, um bei einem Versagen oder Abschalten der Bestromung des Elektromagneten die Kupplung zu schließen.

Bei weiteren typischen Ausführungsformen umfasst die Hubvorrichtung alternativ oder zusätzlich zu dem Elektromagneten eine mechanische Hubvorrichtung zum Bereitstellen einer mechanischen Hubkraft, eine hydraulische Hubvorrichtung zum Bereitstellen einer hydraulischen Hubkraft oder eine pneumatische Hubvorrichtung zum Bereitstellen einer pneumatischen Hubkraft. Typischerweise stellt die Hubvorrichtung die Hubkraft anstelle oder zusätzlich zu der Magnetkraft des Elektromagneten in axialer Richtung zum Kuppeln oder Entkuppeln der Kupplung bereit. Die Hubkraft wirkt typischerweise in axialer Richtung entgegen der Rückstellkraft des mindestens einen Federelementpaars. Bei weiteren typischen Ausführungsformen umfasst die Hubvorrichtung einen Elektromagneten und eine weitere mechanische, hydraulische oder pneumatische Hubvorrichtung, welche eine Hubkraft in der gleichen axialen Richtung wie die Rückstellkraft bereitstellt. Der Elektromagnet kann eingerichtet sein, eine Magnetkraft in axialer Richtung entgegen der Hubkraft und entgegen der Rückstellkraft aufzubringen, insbesondere um die Hubkraft und die Rückstellkraft zu überwinden und die zweite Welle axial in Richtung der Magnetkraft zu bewegen. Bei typischen Ausführungsformen kann die Verwendung eines Elektromagneten in einer Hubvorrichtung oder als Hubvorrichtung den Vorteil haben, dass ein Elektromagnet schnell ansteuerbar sein kann, oder einfach oder kompakt im Aufbau sein kann. Das mindestens eine Federelementpaar kann gemäß hierin beschriebenen Ausführungsformen mit einer geringen Rückstellkraft bereitgestellt werden, so dass der Elektromagnet zum Aufbringen der nötigen Magnetkraft klein und leicht dimensioniert werden kann.

Bei typischen Ausführungsformen können die erste Welle oder die zweite Welle Reibbeläge aufweisen, welche in einem entkuppelten Zustand der Kupplung eine fest mit dem Gehäuse der Kupplung verbundene Reibscheibe klemmen. Typischerweise weisen beide Wellen an den einander zugewandten Planflächen Reibbeläge auf. Insbesondere kann im entkuppelten Zustand der Kupplung ein definiertes Reibmoment bereitgestellt werden.

Gemäß typischen Ausführungsformen ist eine Verwendung einer Wellenverbindung oder einer Kupplung gemäß hierin beschriebenen Ausführungsformen angegeben. Die Verwendung umfasst typischerweise ein Bewegen der zweiten Welle relativ zu der ersten Welle in einer axialen Richtung, insbesondere in einer ersten axialen Richtung von einer ersten axialen Position zu einer zweiten axialen Position.

Wellenverbindungen gemäß hierin beschriebenen Ausführungsformen stellen typischerweise eine steife Drehmomentübertragung zwischen der ersten Welle und der zweiten Welle bei axialer Beweglichkeit bereit. In Ausführungsformen kann eine Wellenverbindung als passives Kupplungselement mit Längenausgleich, z.B. zur Kompensation thermischer Ausdehnung, eingesetzt werden.

Bei Verwendung einer Kupplung, insbesondere bei einem Verfahren zur Betätigung einer Kupplung, kann die Verwendung ein Kuppeln der ersten Welle und der zweiten Welle mit der Rotorwelle umfassen. Das Kuppeln umfasst typischerweise ein Bereitstellen einer Verbindung zwischen der zweiten Welle und der Rotorwelle, insbesondere einer formschlüssigen oder einer reibschlüssigen Verbindung. Eine formschlüssige Verbindung kann insbesondere durch ein Eingreifen einer ersten Verzahnung der zweiten Welle mit einer zweiten Verzahnung der Rotorwelle hergestellt werden. Eine reibschlüssige Verbindung kann durch Reibungskontakt zwischen der Rotorwelle und der zweiten Welle hergestellt werden. Das Bewegen der zweiten Welle erfolgt typischerweise unter Verwendung einer Hubvorrichtung gemäß hierin beschriebenen Ausführungsformen, insbesondere durch Bestromung eines Elektromagneten.

Die Verwendung einer Kupplung umfasst typischerweise ein Entkuppeln der ersten Welle und der zweiten Welle von der Rotorwelle. Typischerweise umfasst das Entkuppeln das Lösen einer Verbindung zwischen der zweiten Welle und der Rotorwelle. Beispielsweise kann eine Bestromung des Elektromagneten abgeschaltet werden. Die Rückstellkraft des mindestens einen Federelementpaars kann die Verbindung zwischen der zweiten Welle und der Rotorwelle lösen. Bei typischen Ausführungsformen umfasst die Verwendung einer Wellenverbindung oder Kupplung ein Bewegen der zweiten Welle relativ zu der ersten Welle in einer von der ersten axialen Richtung verschiedenen zweiten axialen Richtung. Insbesondere kann die zweite Welle von der zweiten axialen Position zu der ersten axialen Position bewegt werden, beispielsweise durch die Rückstellkraft des mindestens einen Federelementpaars.

In Ausführungsformen kann die erste Verzahnung der zweiten Welle in einer Ruhestellung des mindestens einen Federelementpaares mit der zweiten Verzahnung der Rotorwelle in Eingriff sein. Der Elektromagnet stellt insbesondere eine Haltekraft zwischen der Rotorwelle und zweiter Welle bereit. Bei Abschalten der Bestromung des Elektromagneten können die erste Verzahnung und die zweite Verzahnung ab einem bestimmten Drehmoment voneinander abgleiten. Das Abgleiten der Verzahnungen führt typischerweise zu einer Verschiebung der zweiten Welle in Richtung der ersten Welle und zu einem Lösen der Kupplung.

Typische Ausführungsformen können gegenüber dem Stand der Technik den Vorteil bieten, dass Drehmomente zwischen Wellen spielfrei oder torsionssteif übertragen werden können. Typische Ausführungsformen können eine drehrichtungsunabhängige Steifigkeit der Wellenverbindung bereitstellen. Ausführungsformen können ein geringes Gewicht aufweisen. Ein weiterer Vorteil kann sein, dass zum axialen Bewegen der zweiten Welle relativ zu der ersten Welle lediglich eine geringe Hubkraft gegen die Rückstellkraft des mindestens einen Federelementpaares erforderlich ist. Eine Streuung von Rückstellkräften bei in Serie produzierten Wellenverbindungen kann zuverlässig gering gehalten werden. Ausführungsformen können einen verhältnismäßig großen axialen Hub bei verhältnismäßig kleinem Durchmesser der Wellenverbindung bereitstellen. Typische Kupplungen können magnetisch betätigt werden, insbesondere schnell geschaltet werden. Ausführungsformen können einfach, kompakt oder kostengünstig hergestellt werden. Ein weiterer Vorteil kann sein, dass Ausführungsformen mit einer "fail-safe"-Funktion ausgestattet werden können und insbesondere in sicherheitskritischen Anwendungen zum Einsatz kommen können. Beispielsweise können Ausführungsformen in Fluggeräten zum Einsatz kommen, beispielsweise in Lastpfaden oder Antriebssträngen von Fluggeräten, insbesondere in Steuervorrichtungen mit Kraftrückkopplung (Force-Feedback).

### Kurze Beschreibung der Zeichnungen

Weitere Vorteile und Merkmale bevorzugter Ausführungsformen der Erfindung werden nachfolgend anhand der beiliegenden Zeichnungen erläutert, wobei die Figuren zeigen:
- Fig. 1A: zeigt eine schematische Ansicht einer typischen Wellenverbindung, wobei die erste Welle nicht dargestellt ist;
- Fig. 1B: zeigt eine schematische Ansicht entlang der Drehachse auf die Wellenverbindung der Fig. 1A;
- Fig. 1C: zeigt eine schematische Seitenansicht der Wellenverbindung der Fig. 1A;
- Fig. 2: zeigt eine schematische Ansicht einer Anordnung von Federelementpaaren gemäß einer typischen Ausführungsform;
- Fig. 3: zeigt eine schematische Ansicht einer weiteren typischen Wellenverbindung, wobei die erste Welle nicht dargestellt ist;
- Fig. 4: zeigt einen Ausschnitt einer Kupplung mit einer Wellenverbindung gemäß einer Ausführungsform;
- Fig. 5: zeigt einen weiteren Ausschnitt der Kupplung der Fig. 4 mit weiteren Komponenten der Kupplung; und
- Fig. 6: zeigt ein Flussdiagramm einer Verwendung einer Kupplung gemäß einer Ausführungsform.

### Beschreibung von Ausführungsformen

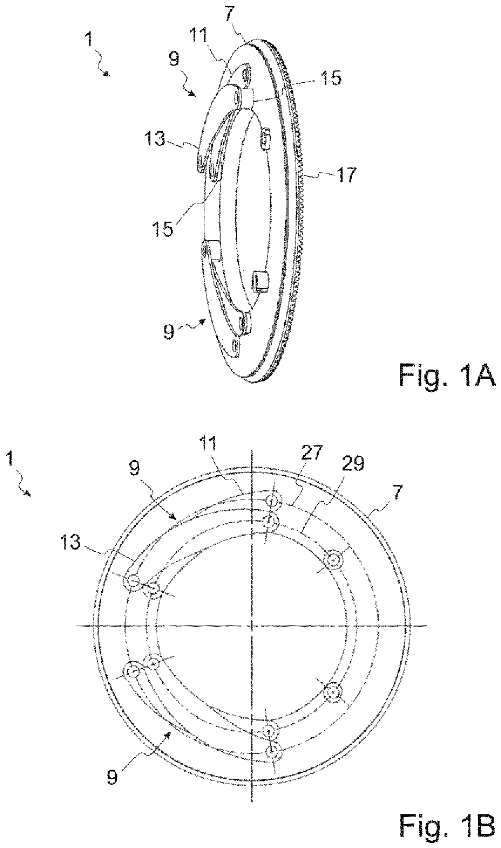

Nachfolgend werden typische Ausführungsformen anhand der Figuren beschrieben, wobei die Erfindung nicht auf die Ausführungsbeispiele beschränkt ist, vielmehr wird der Umfang der Erfindung durch die Ansprüche bestimmt. Bei der Beschreibung der Figuren werden die gleichen Bezugszeichen für gleiche oder ähnliche Teile verwendet. Teilweise werden Merkmale, welche bereits im Zusammenhang mit anderen Figuren beschrieben wurden, der Übersichtlichkeit halber nicht nochmals beschrieben. Teilweise sind Merkmale, welche in einer Figur mehrfach dargestellt sind (beispielsweise Details der Federelementpaare 9 in Figuren 1A bis 3), lediglich einmal mit Bezugszeichen gekennzeichnet.

Figuren 1A bis 1C zeigen schematische Ansichten einer Wellenverbindung 1 mit einer um eine Drehachse 3 drehbaren zweiten Welle 7 und zwei an der zweiten Welle 7 befestigten Federelementpaaren 9. Der Übersichtlichkeit halber ist in Figuren 1A bis 1C eine erste Welle der Wellenverbindung 1 ausgeblendet. Die zweite Welle 7 ist kreisringförmig ausgebildet. Auf der der ersten Welle abgewandten Seite weist die zweite Welle 7 eine Verzahnung 17 auf. Die Verzahnung 17 kann beispielsweise bei Verwendung der Wellenverbindung 1 in einer Kupplung dem Eingriff mit einer weiteren Verzahnung einer Rotorwelle dienen.

Auf der der ersten Welle zugewandten Seite der zweiten Welle 7 sind die zwei Federelementpaare 9 an der zweiten Welle 7 befestigt. Jedes der Federelementpaare 9 umfasst ein erstes Federelement 11 und ein zweites Federelement 13. Das erste Federelement 11 und das zweite Federelement 13 sind jeweils an der zweiten Welle 7 befestigt, insbesondere über Befestigungsmittel mit Abstandshalter 15. Das erste Federelement 11 und das zweite Federelement 13 sind jeweils mit einem radial inneren Federelementende an der zweiten Welle 7 befestigt, wobei das radial innere Federelementende auf einem zweiten Kreis 29 um die Drehachse 3 angeordnet ist.

Weiter sind das erste Federelement 11 und das zweite Federelement 13 jeweils zur Befestigung an der ersten Welle eingerichtet. Die Befestigung des ersten Federelement 11 und des zweiten Federelement 13 an der ersten Welle erfolgt jeweils an einem radial äußeren Federelementende, welches auf einem ersten Kreis 27 um die Drehachse 3 angeordnet ist.

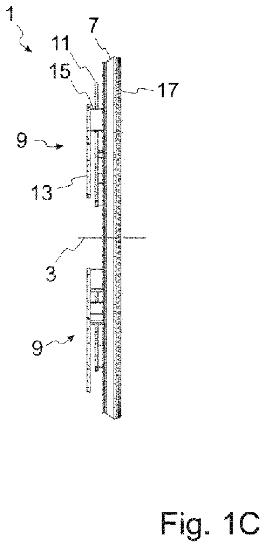

Wie in Figuren 1A und 1C dargestellt, sind das erste Federelement 11 und das zweite Federelement 13 eines Federelementpaares 9 in Richtung der Drehachse 3 axial versetzt zueinander angeordnet, insbesondere axial beabstandet. Das erste Federelement 11 und das zweite Federelement 13 sind jeweils als längliche Blattfedern ausgebildet. Das erste Federelement 11 und das zweite Federelement 13 sind jeweils im Wesentlichen orthogonal zu der Drehachse 3 ausgerichtet, wie in Fig. 1C dargestellt. **In** Fig. 1B erstrecken sich die Blattfedern außerdem im Wesentlichen in Umfangsrichtung um die Drehachse 3, wobei das zweite Federelement 13 das erste Federelement 11 in der Ansicht entlang der Drehachse 3 überkreuzt. Die Figuren 1A bis 1C zeigen eine Wellenverbindung mit drei Federelementpaaren 9, wobei ein Federelementpaar der Übersichtlichkeit halber ausgeblendet ist. Bei weiteren Ausführungsformen kann lediglich ein Federelementpaar oder es können mehr als zwei Federelementpaare vorgesehen sein.

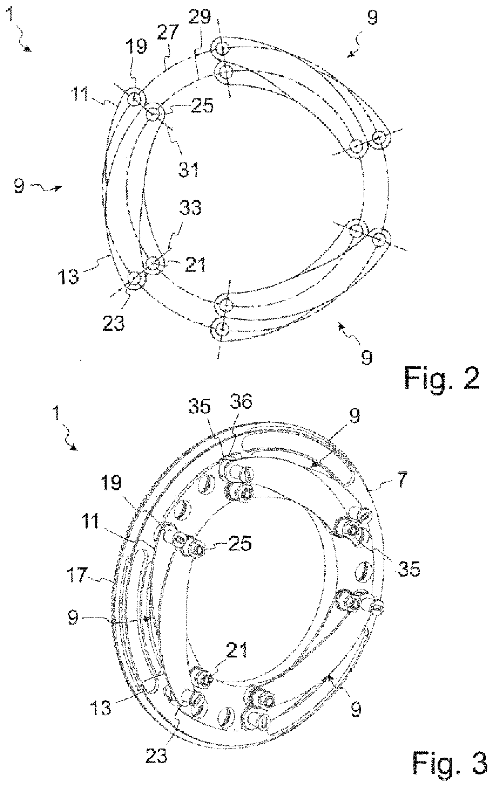

Fig. 2 zeigt eine Anordnung von drei Federelementpaaren 9, welche gleichmäßig in Umfangsrichtung um die Drehachse verteilt angeordnet sind. **In** Fig. 2 sind der Übersichtlichkeit halber lediglich die Federelementpaare 9 und die jeweiligen Befestigungspositionen dargestellt. Das erste Federelement 11 eines Federelementpaares 9 ist an einer ersten Befestigungsposition 19 an der ersten Welle befestigt und an einer zweiten Befestigungsposition 21 an der zweiten Welle. Das zweite Federelement 13 des Federelementpaares 9 ist an einer dritten Befestigungsposition 23 an der ersten Welle befestigt und an einer vierten Befestigungsposition 25 an der zweiten Welle. Die erste Befestigungsposition 19 des ersten Federelements 11 und die dritte Befestigungsposition 23 des zweiten Federelements 13 liegen zur Befestigung an der ersten Welle auf einem ersten Kreis 27 um die Drehachse. Die zweite Befestigungsposition 21 des ersten Federelements 11 und die vierte Befestigungsposition 25 des zweiten Federelements 13 liegen zur Befestigung an der zweiten Welle auf einem zweiten Kreis 29, wobei der zweite Kreis 29 einen kleineren Radius aufweist als der erste Kreis 27.

Das erste Federelement 11 und das zweite Federelement 13 sind überkreuzt angeordnet, wobei insbesondere die erste Befestigungsposition 19 des ersten Federelements 11 und die vierte Befestigungsposition 25 des zweiten Federelements 13 auf einer ersten Winkelposition 31 bezüglich der Drehachse liegen. Die zweite Befestigungsposition 21 des ersten Federelements 11 und die dritte Befestigungsposition 23 des zweiten Federelements 13 liegen auf einer von der ersten Winkelposition 31 verschiedenen, zweiten Winkelposition 33. Das erste Federelement 11 und das zweite Federelement 13 erstrecken sich über denselben Winkelbereich. Obwohl die Anordnung der Federelemente lediglich für ein Federelementpaar 9 beschrieben wurde, sind auch die Federelemente der zwei weiteren Federelementpaare 9 in Fig. 2 entsprechend der beschriebenen Anordnung in Umfangsrichtung versetzt angeordnet.

Fig. 3 zeigt schematisch eine Wellenverbindung 1 mit Federelementpaaren 9, welche gemäß Fig. 2 an einer ersten Welle (nicht dargestellt) und an einer zweiten Welle 7 befestigt sind. Die Federelemente sind über Befestigungsmittel 35 mit der ersten Welle und der zweiten Welle 7 verbunden. Bei Ausführungsformen weist die zweite Welle 7 an Befestigungspositionen, welche zur Befestigung von Federelementen an der ersten Welle vorgesehen sind, jeweils eine Ausnehmung 36 um das jeweilige Befestigungsmittel 35 auf. Insbesondere können die Federelemente mittels der Befestigungsmittel 35 durch die Ausnehmungen 36 montiert werden.

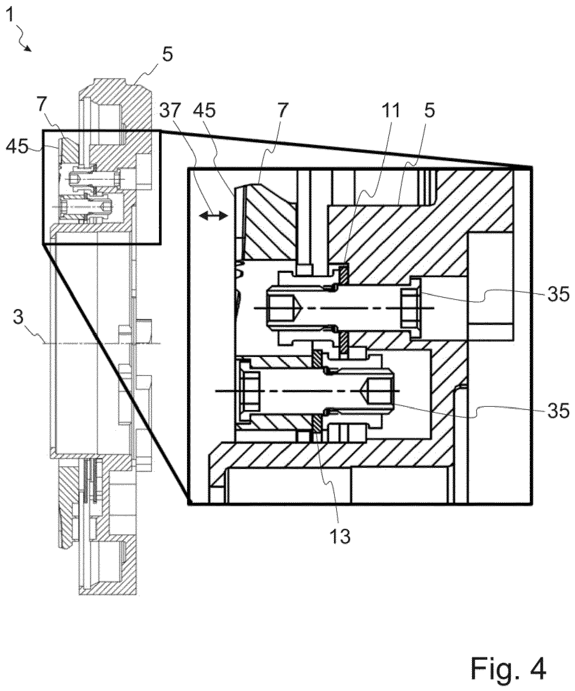

Fig. 4 zeigt einen Ausschnitt einer typischen Kupplung, wobei der Ausschnitt insbesondere eine Wellenverbindung 1 zur Verbindung einer ersten Welle 5 und einer zweiten Wellen 7 darstellt. Die zweite Welle 7 weist eine erste Verzahnung 45 zur Kupplung mit einer in Fig. 4 nicht dargestellten Rotorwelle auf. Beide Wellen sind ringförmig ausgebildet und umfassen jeweils einen radialen Bereich, in welchem sich beide Wellen erstrecken. Der überlappende, radiale Bereich ist in der Detailansicht in Fig. 4 vergrößert dargestellt. **In** dem überlappenden radialen Bereich sind die beiden Wellen hintereinander angeordnet und durch Federelementpaare verbunden, welche in Umfangsrichtung um die Drehachse 3 verteilt angeordnet sind. Jedes Federelementpaar umfasst ein erstes Federelement 11 und ein zweites Federelement 13, welche jeweils als Blattfeder ausgebildet sind, beispielsweise wie in Figuren 1 bis 3 dargestellt. Die Blattfedern sind jeweils über Befestigungsmittel 35 an der ersten Welle 5 und an der zweiten Welle 7 befestigt. Die zweite Welle 7 ist in einer ersten axialen Position dargestellt, in welcher die Federelemente nicht ausgelenkt sind und die zweite Welle 7 von einer in Fig. 4 nicht dargestellten Rotorwelle entkuppelt ist. Die zweite Welle 7 kann in axialer Richtung 37 bewegt werden, insbesondere zu einer zweiten axialen Position, welche weiter von der ersten Welle 5 entfernt ist als die erste axiale Position.

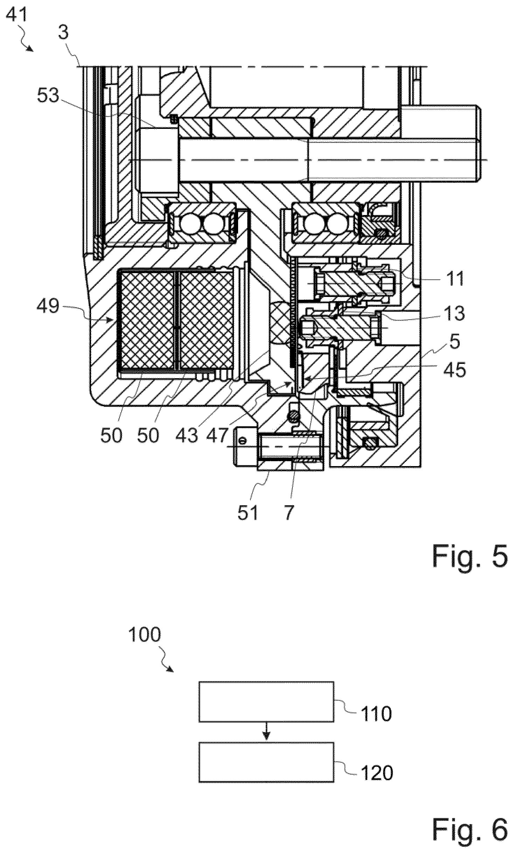

Fig. 5 zeigt einen weiteren Ausschnitt der in Fig. 4 dargestellten Kupplung 41 mit weiteren Komponenten der Kupplung 41, wobei lediglich eine Hälfte der Schnittansicht der Kupplung 41 dargestellt ist. Die Kupplung 41 umfasst ein Gehäuse 51, eine Rotorwelle 43 und eine Wellenverbindung mit Federelementpaaren, einer ersten Welle 5 und einer zweiten Welle 7. Das Gehäuse 51 ist gegen Verdrehung festgelegt. Die Rotorwelle 43 kann beispielsweise mittels Schrauben 53 mit einer Welle eines Elektromotors (nicht dargestellt) verbunden werden. Die erste Welle 5, die zweite Welle 7 und die Rotorwelle 43 sind koaxial um eine Drehachse 3 drehbar.

Die zweite Welle 7 weist auf der der Rotorwelle 43 zugewandten Seite der zweiten Welle 7 eine erste Verzahnung 45 zum Eingriff mit einer zweiten Verzahnung 47 der Rotorwelle 43 auf. Fig. 5 zeigt die zweite Welle 7 in einer ersten axialen Position, in welcher die Federelemente unbelastet sind. Die Kupplung 41 umfasst weiter einen Elektromagneten 49 mit Magnetspulen 50. Der Elektromagnet 49 ist eingerichtet, bei Bestromung der Magnetspulen 50 eine Magnetkraft auf die zweite Welle 7 zu bewirken, so dass die zweite Welle 7 gegen die Rückstellkraft der Federelemente in Richtung der Rotorwelle 43 in eine zweite axiale Position gezogen wird, in welcher die erste Verzahnung 45 der zweiten Welle 7 in die zweite Verzahnung 47 der Rotorwelle eingreift. Insbesondere schließt der Elektromagnet bei Bestromung der Magnetspulen 50 einen magnetischen Kreis durch das Gehäuse 51, die Rotorwelle 43 und die zweite Welle 7.

Fig. 6 zeigt ein Flussdiagramm einer Verwendung 100 einer Kupplung 41, wie beispielsweise in Fig. 5 dargestellt. Bei Block 110 wird die zweite Welle 7 zum Kuppeln der ersten Welle 5 und der zweiten Welle 7 mit der Rotorwelle 43 in eine erste axiale Richtung bewegt. Zum Bewegen der zweiten Welle 7 wird der Elektromagnet 49 bestromt. Die zweite Welle 7 wird durch die Magnetkraft des Elektromagneten 49 von einer ersten axialen Position an der ersten Welle 5 in eine zweite axiale Position gezogen, wobei die Federelementpaare spielfrei vorgespannt werden. An der zweiten axialen Position greift die erste Verzahnung 45 der zweiten Welle 7 in die zweite Verzahnung 47 der Rotorwelle 43 ein. Mit dem Eingriff der Verzahnungen werden die erste Welle 5, die zweite Welle 7 und die Rotorwelle 43 spielfrei und in beiden Drehrichtungen torsionssteif gekuppelt.

Bei Block 120 wird die zweite Welle 7 zum Entkuppeln der ersten Welle 5 und der zweiten Welle 7 von der Rotorwelle 43 in eine von der ersten axialen Richtung verschiedene zweite axiale Richtung bewegt. Insbesondere wird die Bestromung des Elektromagneten 49 abgeschaltet. Die Federelementpaare ziehen die zweite Welle zurück in die erste axiale Position, wobei die erste Verzahnung aus der zweiten Verzahnung 47 ausgerückt wird. Insbesondere wird die Rotorwelle 43 von der ersten Welle 5 und der zweiten Welle 7 entkuppelt. Die Kupplung 41 der Fig. 5 weist eine "fail-safe"-Funktion auf, bei welcher bei einem Versagen oder Abschalten des Elektromagneten 49 die Rotorwelle 43 von der ersten Welle 5 und der zweiten Welle 7 entkuppelt wird.

## Patentansprüche

1. Wellenverbindung (1), umfassend
- eine um eine Drehachse (3) drehbare erste Welle (5),
- eine koaxial zu der ersten Welle (5) angeordnete und relativ zu der ersten Welle (5) axial bewegliche zweite Welle (7), und
- mindestens ein Federelementpaar (9) mit jeweils einem ersten Federelement (11) und einem zweiten Federelement (13),
wobei das erste Federelement (11) und das zweite Federelement (13) jeweils an der ersten Welle (5) und an der zweiten Welle (7) befestigt sind, und wobei das erste Federelement (11) und das zweite Federelement (13) axial versetzt zueinander angeordnet sind,
**dadurch gekennzeichnet, dass**
das erste Federelement (11) und das zweite Federelement (13) überkreuzt angeordnet sind.

2. Wellenverbindung (1) nach Anspruch 1, wobei die erste Welle (5) und die zweite Welle (7) in einer axialen Richtung hintereinander angeordnet sind.

3. Wellenverbindung (1) nach Anspruch 1 oder 2, wobei das erste Federelement (11) und das zweite Federelement (13) jeweils als eine Blattfeder ausgebildet sind.

4. Wellenverbindung (1) nach Anspruch 3, wobei die Blattfeder zumindest im Wesentlichen parallel zu einer zur Drehachse (3) orthogonalen Ebene ausgerichtet ist.

5. Wellenverbindung (1) nach Anspruch 3 oder 4, wobei die Blattfeder bogenförmig ausgebildet ist.

6. Wellenverbindung (1) nach einem der Ansprüche 3 bis 5, wobei sich die Blattfeder im Wesentlichen in Umfangsrichtung um die Drehachse (3) erstreckt.

7. Wellenverbindung (1) nach einem der vorhergehenden Ansprüche, umfassend mindestens zwei Federelementpaare (9), wobei die mindestens zwei Federelementpaare (9) in Umfangsrichtung um die Drehachse (3) verteilt angeordnet sind.

8. Wellenverbindung (1) nach einem der vorhergehenden Ansprüche, wobei sich das erste Federelement (11) und das zweite Federelement (13) jeweils über denselben Winkelbereich um die Drehachse (3) erstrecken.

9. Wellenverbindung (1) nach einem der vorhergehenden Ansprüche, wobei das erste Federelement (11) und das zweite Federelement (13) jeweils eine Befestigungsposition auf einem ersten Kreis (27) um die Drehachse (3) an der ersten Welle (5) aufweisen, und wobei das erste Federelement (11) und das zweite Federelement (13) jeweils eine weitere Befestigungsposition auf einem zweiten Kreis (29) um die Drehachse (3) an der zweiten Welle (7) aufweisen.

10. Wellenverbindung (1) nach einem der vorhergehenden Ansprüche, wobei die zweite Welle (7) eine Verzahnung (17) aufweist.

11. Wellenverbindung (1) nach einem der vorhergehenden Ansprüche, wobei die erste Welle (5) und/oder die zweite Welle (7) kreisringförmig ausgebildet ist.

12. Kupplung (41), umfassend
- eine Wellenverbindung (1) nach einem der vorhergehenden Ansprüche, und
- eine koaxial zu der ersten Welle (5) und der zweiten Welle (7) angeordnete Rotorwelle (43),
wobei die Kupplung (41) zum Kuppeln der ersten Welle (5) und der zweiten Welle (7) mit der Rotorwelle (43) dazu eingerichtet ist, die zweite Welle (7) axial in Richtung der Rotorwelle (43) zu bewegen.

13. Kupplung (41) nach Anspruch 12,
- wobei die zweite Welle (7) eine erste Verzahnung (45) aufweist, und wobei die Rotorwelle (43) eine zum Eingriff mit der ersten Verzahnung (45) eingerichtete zweite Verzahnung (47) aufweist; und/oder
weiter umfassend einen Elektromagneten (49) eingerichtet zum Bewegen der zweiten Welle (7) gegen eine Rückstellkraft des mindestens einen Federelementpaares (9) von einer ersten axialen Position zu einer zweiten axialen Position.

14. Verwendung einer Wellenverbindung (1) nach einem der Ansprüche 1 bis 11 oder einer Kupplung (41) nach einem der Ansprüche 12 bis 13, mit Bewegen der zweiten Welle (7) relativ zu der ersten Welle (5) in einer axialen Richtung.

## Claims

1. Shaft connection (1), comprising
- a first shaft (5) which is rotatable about an axis of rotation (3),
- a second shaft (7) which is arranged coaxially to the first shaft (5) and is axially movable relative to the first shaft (5), and
- at least one pair of spring elements (9) which each comprise a first spring element (11) and a second spring element (13),
the first spring element (11) and the second spring element (13) each being attached to the first shaft (5) and to the second shaft (7), and the first spring element (11) and the second spring element (13) being axially offset from one another,
**characterised in that**
the first spring element (11) and the second spring element (13) are arranged in a crossed arrangement.

2. Shaft connection (1) according to claim 1, wherein the first shaft (5) and the second shaft (7) are arranged one behind the other in an axial direction.

3. Shaft connection (1) according to claim 1 or 2, wherein the first spring element (11) and the second spring element (13) are each designed as a leaf spring.

4. Shaft connection (1) according to claim 3, wherein the leaf spring is aligned at least substantially in parallel with a plane orthogonal to the axis of rotation (3).

5. Shaft connection (1) according to claim 3 or 4, wherein the leaf spring is arc-shaped.

6. Shaft connection (1) according to any of claims 3 to 5, wherein the leaf spring extends substantially in the circumferential direction about the axis of rotation (3).

7. Shaft connection (1) according to any of the preceding claims, comprising at least two pairs of spring elements (9), wherein the at least two pairs of spring elements (9) are distributed in the circumferential direction about the axis of rotation (3).

8. Shaft connection (1) according to any of the preceding claims, wherein the first spring element (11) and the second spring element (13) each extend over the same angular range about the axis of rotation (3).

9. Shaft connection (1) according to any of the preceding claims, wherein the first spring element (11) and the second spring element (13) each have an attachment position on a first circle (27) about the axis of rotation (3) on the first shaft (5), and wherein the first spring element (11) and the second spring element (13) each have a further attachment position on a second circle (29) about the axis of rotation (3) on the second shaft (7).

10. Shaft connection (1) according to any of the preceding claims, wherein the second shaft (7) has teeth (17).

11. Shaft connection (1) according to any of the preceding claims, wherein the first shaft (5) and/or the second shaft (7) is annular.

12. Coupling (41), comprising
- a shaft connection (1) according to any of the preceding claims, and
- a rotor shaft (43) which is arranged coaxially to the first shaft (5) and the second shaft (7),
wherein the coupling (41), in order to couple the first shaft (5) and the second shaft (7) to the rotor shaft (43), is configured to move the second shaft (7) axially in the direction of the rotor shaft (43).

13. Coupling (41) according to claim 12,
- wherein the second shaft (7) has first teeth (45), and wherein the rotor shaft (43) has second teeth (47) which are configured to engage with the first teeth (45); and/or
further comprising an electromagnet (49) which is configured to move the second shaft (7), against a restoring force of the at least one pair of spring elements (9), from a first axial position to a second axial position.

14. Use of a shaft connection (1) according to any of claims 1 to 11 or a coupling (41) according to either of claims 12 to 13, with movement of the second shaft (7) relative to the first shaft (5) in an axial direction.

## Revendications

1. Liaison d'arbres (1) comprenant
- un premier arbre (5) pouvant tourner autour d'un axe de rotation (3),
- un deuxième arbre (7) disposé coaxialement au premier arbre (5) et mobile axialement par rapport au premier arbre (5), et
- au moins une paire d'éléments élastiques (9) comprenant chacune un premier élément élastique (11) et un deuxième élément élastique (13),
le premier élément élastique (11) et le deuxième élément élastique (13) étant fixés chacun au premier arbre (5) et au deuxième arbre (7), et le premier élément élastique (11) et le deuxième élément élastique (13) étant disposés de manière décalée axialement l'un par rapport à l'autre,
**caractérisée en ce que**
le premier élément élastique (11) et le deuxième élément élastique (13) sont disposés en croix.

2. Liaison d'arbres (1) selon la revendication 1,
dans laquelle le premier arbre (5) et le deuxième arbre (7) sont disposés l'un derrière l'autre dans une direction axiale.

3. Liaison d'arbres (1) selon la revendication 1 ou 2,
dans laquelle le premier élément élastique (11) et le deuxième élément élastique (13) sont chacun réalisés sous la forme d'un ressort à lame.

4. Liaison d'arbres (1) selon la revendication 3,
dans laquelle le ressort à lame est orienté au moins sensiblement parallèlement à un plan orthogonal à l'axe de rotation (3).

5. Liaison d'arbres (1) selon la revendication 3 ou 4,
dans laquelle le ressort à lame est de forme arquée.

6. Liaison d'arbres (1) selon l'une des revendications 3 à 5,
dans laquelle le ressort à lame s'étend sensiblement dans la direction circonférentielle autour de l'axe de rotation (3).

7. Liaison d'arbres (1) selon l'une des revendications précédentes,
comprenant au moins deux paires d'éléments élastiques (9), lesdites au moins deux paires d'éléments élastiques (9) étant réparties dans la direction circonférentielle autour de l'axe de rotation (3).

8. Liaison d'arbres (1) selon l'une des revendications précédentes,
dans laquelle le premier élément élastique (11) et le deuxième élément élastique (13) s'étendent chacun sur la même plage angulaire autour de l'axe de rotation (3).

9. Liaison d'arbres (1) selon l'une des revendications précédentes,
dans laquelle le premier élément élastique (11) et le deuxième élément élastique (13) présentent chacun une position de fixation sur un premier cercle (27) autour de l'axe de rotation (3) au niveau du premier arbre (5), et le premier élément élastique (11) et le deuxième élément élastique (13) présentent chacun une autre position de fixation sur un deuxième cercle (29) autour de l'axe de rotation (3) au niveau du deuxième arbre (7).

10. Liaison d'arbres (1) selon l'une des revendications précédentes,
dans laquelle le deuxième arbre (7) comporte une denture (17).

11. Liaison d'arbres (1) selon l'une des revendications précédentes,
dans laquelle le premier arbre (5) et/ou le deuxième arbre (7) est en forme d'anneau circulaire.

12. Accouplement (41) comprenant
- une liaison d'arbres (1) selon l'une des revendications précédentes, et
- un arbre de rotor (43) disposé coaxialement au premier arbre (5) et au deuxième arbre (7),
l'accouplement (41) destiné à accoupler le premier arbre (5) et le deuxième arbre (7) à l'arbre de rotor (43) étant conçu pour déplacer le deuxième arbre (7) axialement en direction de l'arbre de rotor (43).

13. Accouplement (41) selon la revendication 12,
dans lequel le deuxième arbre (7) comporte une première denture (45), et l'arbre de rotor (43) comporte une deuxième denture (47) conçue pour s'engrener avec la première denture (45) ; et/ou
comprenant en outre un électroaimant (49) conçu pour déplacer le deuxième arbre (7) d'une première position axiale vers une deuxième position axiale à l'encontre d'une force de rappel de ladite au moins une paire d'éléments élastiques (9).

14. Utilisation d'une liaison d'arbres (1) selon l'une des revendications 1 à 11 ou d'un accouplement (41) selon l'une des revendications 12 à 13, avec déplacement du deuxième arbre (7) par rapport au premier arbre (5) dans une direction axiale.
